# EUROPÄISCHE PATENTANMELDUNG

(11) **EP 3 159 785 A2**
(43) Veröffentlichungstag der Anmeldung: **26.04.2017**
(21) Anmeldenummer: 16189197.3
(22) Anmeldetag: 16.09.2016
(51) Int. Cl.: G06F 3/0485, A47F 5/02, G06F 3/14, G06F 1/16, G09F 9/00, G09F 11/02, G06F 3/0488

(54) **BENUTZERSCHNITTSTELLE UND VERFAHREN ZUR INTERAKTIVEN AUSWAHL EINER ANZEIGE**

(30) Priorität: 29.09.2015 DE 102015218740
(71) Anmelder: Siemens Aktiengesellschaft, 80333 München (DE)
(72) Erfinder: Platz, Axel, 81479 München (DE); Sander, Sonja, 80797 München (DE)

(57) **Zusammenfassung**

Die Benutzerschnittstelle ordnet auf einer Mantelfläche (2) eines Zylinders Anzeigen (1) an, welche durch Rotation um die Rotationsachse des Zylinders einfach gesichtet und ausgewählt werden können. Ein Benutzer bedient hierzu ein Eingabeelement (9). Ein Antrieb (5) rotiert die Mantelfläche (2) mit den Anzeigen (1) entsprechend den Eingaben des Benutzers. Neben diesem Ausführungsbeispiel einer mechanischen Anordnung wird auch eine Benutzerschnittstelle vorgeschlagen, welche die Anzeigen (1) und die Mantelfläche (2) lediglich virtuell als graphische Objekte auf einer graphischen Benutzeroberfläche (11) visualisiert. Die Rotation der Anzeigen (1) wird nun als Animation auf der graphischen Benutzeroberfläche (11) ausgegeben. Dies bietet den Vorteil, dass eine Visualisierung bereitgestellt wird, welche ein mentales Modell des Benutzers auf der graphischen Benutzeroberfläche (11) abbildet und zugleich die Aufmerksamkeit des Benutzers durch die Animation steigert. Die Animation unterstützt hierbei das Verständnis des Benutzers für das physikalische Modell der Metapher. Die Symmetrieachse des Zylinders kann sowohl vertikal als auch horizontal auf der graphischen Benutzeroberfläche (11) verlaufen. Im zweiten Fall wirkt die graphische Benutzeroberfläche wie die Datumsanzeige einer Armbanduhr. Beispielsweise kann der Benutzer auf eine der Anzeigen (1) mit der Maus klicken, woraufhin diese in die mittlere Position rollt, während die übrigen Anzeigen (1) entsprechend ihrer Reihenfolge auf der Mantelfläche nachrollen. Die Reihenfolge der Anzeigen (1) bleibt dabei stets erhalten.

## Beschreibung

Die Erfindung betrifft die interaktive Auswahl von Anzeigen, wie sie etwa in Leitwarten eingesetzt werden. Die Anzeigen stellen hierbei jeweils Bildinformationen dar, beispielsweise Echtzeitinformationen, welche von Sensoren in einem Energienetz oder in einer industriellen Anlage empfangen werden. Die Bildinformationen können hierbei textuelle, numerische oder graphische Inhalte umfassen, welche beispielsweise Sensormessungen repräsentieren. Die Anzeigen können auch Aufgaben zur Überwachung und Wartung einer Anlage ausgeben. Sie können ferner auch Steuerelemente einer graphischen Benutzeroberfläche enthalten, mit denen sich Prozesse in der Anlage steuern oder regeln lassen. Die Anzeigen können weiterhin auch virtuell sein. In diesem Fall wird die Anzeige durch eine pixelbasierte oder vektorbasierte Bildinformation gebildet, welche statisch ist oder in diskreten Zeitabständen oder kontinuierlich aktualisiert wird.

Bekannt ist, eine Leitwarte mit mehreren Anzeigen, beispielsweise Flachbildschirmen, auszustatten, welche jeweils unterschiedliche Bildinformationen ausgeben. Die Anzeigen sind hierbei über Halterungen an einem Arbeitsplatz eines Benutzers montiert. In der Regel stehen mehr Bildinformationen zur Verfügung, als auf den vorhandenen Anzeigen ausgegeben werden können. In diesem Zusammenhang kann eine Benutzerschnittstelle erlauben, Bildinformationen von einer Anzeige auf eine andere Anzeige umzuschalten, oder die Bildinformationen auf einer Anzeige durch Bildinformationen auszutauschen, welche bisher auf keiner der Anzeigen ausgegeben wurden.

Leitwarten verfügen häufig über eine Großbildwand. In diesem Zusammenhang kann ein Bedarf bestehen, eine der Anzeigen auszuwählen, damit deren Bild auf der Großbildwand ausgegeben wird. Eine solche Auswahl kann beispielsweise über Schalter realisiert werden, welche den Anzeigen eindeutig zugeordnet sind.

Durch die vorliegende Erfindung soll eine Benutzerschnittstelle und ein Verfahren zur interaktiven Auswahl einer Anzeige geschaffen werden, welche eine Alternative zum Stand der Technik bereitstellen.

Diese Aufgabe wird durch eine Benutzerschnittstelle gelöst, welche mehrere Anzeigen aufweist, welche nebeneinander auf einer Mantelfläche eines zylindrischen oder prismenförmigen Trägerelements angeordnet sind. Eine Steuereinheit ist eingerichtet zur Rotation der Anzeigen um eine Rotationsachse, welche insbesondere eine Symmetrieachse des Trägerelements ist, in Abhängigkeit von Eingabesignalen, wodurch eine der Anzeigen in einer Auswahlposition positionierbar ist.

Bei dem Verfahren rotiert eine Steuereinheit mehrere Anzeigen, welche nebeneinander auf einer Mantelfläche eines zylindrischen oder prismenförmigen Trägerelementes angeordnet sind, in Abhängigkeit von Eingabesignalen um eine Rotationsachse, welche insbesondere eine Symmetrieachse des Trägerelements ist, wodurch eine der Anzeigen in einer Auswahlposition positioniert wird.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden.

Die Eingabesignale werden beispielsweise von einem Eingabeelement erzeugt, welches hierzu Benutzereingaben auswertet - beispielsweise eine Computermaus. Als Eingabeelement kann auch ein Tastschirm dienen, welcher Berührungsgesten auswertet.

Die Anzeigen sind beispielsweise fest auf der Mantelfläche und in festem Abstand zueinander angeordnet. In diesem Fall wird das Trägerelement als Ganzes rotiert. Die Anzeigen können aber auch beweglich auf der Mantelfläche angeordnet sein, wodurch auch ein Abstand der Anzeigen zueinander flexibel einstellbar ist. Beispielsweise können die Anzeigen auf der Mantelfläche auf Schienen verfahren werden.

Das Trägerelement hat beispielsweise die Form eines senkrechten Kreiszylinders oder eines geraden Prismas. Die Rotationsachse entspricht hierbei der Längs- bzw. Symmetrieachse des Trägerelements. Die Rotation bietet den Vorteil, dass die Aufmerksamkeit eines Benutzers erhöht wird. Die Benutzerschnittstelle und das Verfahren eignen sich hierdurch auch für Präsentationen. Die Interaktion mittels Benutzereingaben gestaltet sich intuitiv. Die Auswahlposition liegt aus Sicht des Benutzers beispielsweise in der Mitte der Seite der Mantelfläche, die ihm zugewandt ist. Hier kann er den Inhalt der Anzeige in der Auswahlposition besonders gut ablesen, da er ihm am nächsten ist. Die ausgewählte Anzeige kann zusätzlich über eine Großbildwand oder einen Projektor ausgegeben werden.

Gemäß einer Ausführungsform wandelt ein Eingabeelement Benutzereingaben in die Eingabesignale um. Das Trägerelement ist auf einer Welle montiert. Ein Antrieb ist über ein Getriebe mit der Welle verzahnt und wird durch die Steuereinheit angesteuert.

In einer Weiterbildung sind die Anzeigen LED-, OLED- oder LCD-Anzeigen.

Gemäß einer Ausführungsform beinhaltet die Benutzerschnittstelle einen Bildschirm. Die Steuereinheit ist ein Prozessor, welcher programmiert ist zur Ausgabe der Anzeigen als graphische Elemente einer graphischen Benutzeroberfläche auf dem Bildschirm, wobei das Trägerelement, dessen Mantelfläche und die Anzeigen virtuell sind. Der Prozessor ist weiterhin programmiert zur Auswertung der Eingabesignale und zur Rotation der Anzeigen auf der graphischen Benutzeroberfläche in Abhängigkeit von den Eingabesignalen.

In der entsprechenden Ausführungsform des Verfahrens ist die Steuereinheit ein Prozessor, welcher die Anzeigen als graphische Elemente einer graphischen Benutzeroberfläche auf einem Bildschirm ausgibt, wobei das Trägerelement, dessen Mantelfläche und die Anzeigen virtuell sind. Der Prozessor wertet weiterhin die Eingabesignale aus und rotiert die Anzeigen in Abhängigkeit von den Eingabesignalen auf der graphischen Benutzeroberfläche.

Vorzugsweise wird diese Rotation als Animation auf der graphischen Benutzeroberfläche ausgegeben, welche die Anzeigen entlang der Mantelfläche verschiebt.

Diese Ausführungsform bietet den Vorteil, dass eine Visualisierung bereitgestellt wird, welche ein mentales Modell eines Benutzers auf der graphischen Benutzeroberfläche abbildet und zugleich durch die Animation die Aufmerksamkeit des Benutzers steigert. Die Animation, welche die Anzeigen in Abhängigkeit von den Eingabesignalen entlang der Mantelfläche auf der graphischen Benutzeroberfläche verschiebt, unterstützt hierbei das Verständnis des Benutzers für das physikalische Modell der Metapher.

Das Trägerelement ist ein senkrechter Kreiszylinder oder ein gerades Prisma, und stellt somit eine einfache graphische Form bereit, mit deren Verhalten der Benutzer aus der physischen Welt vertraut ist, wodurch er dieses mentale Modell leicht auf die graphische Benutzeroberfläche übertragen kann. Die Anzeigen sind auf der Mantelfläche nach außen orientiert und ermöglichen eine sehr gute Lesbarkeit.

Das Trägerelement muss nicht unabhängig von der Mantelfläche als graphisches Element auf der graphischen Benutzeroberfläche visualisiert werden. Vielmehr kann das Trägerelement auch lediglich eine geometrische Beschreibung sein, welche eine Berechnung der Mantelfläche sowie deren Abbildung auf der graphische Benutzeroberfläche erlaubt. Weiterhin muss auch die Mantelfläche selbst nicht als eigenständiges graphisches Element visualisiert werden, da die Mantelfläche indirekt durch die Anordnung der Anzeigen repräsentiert wird. Zur besseren Veranschaulichung können jedoch auch die Mantelfläche und/oder das Trägerelement selbst zusätzlich zu den Anzeigen als graphische Elemente auf der graphischen Benutzeroberfläche visualisiert werden.

Die Auswahlposition liegt beispielsweise aus Sicht des Benutzers in der Mitte Mantelfläche, d.h. mittig vor der Rotationsachse. Die Anzeige in der Auswahlposition wird perspektivisch aufgrund ihrer Nähe zum Betrachter mit der größten Fläche auf dem Bildschirm abgebildet, wodurch sich ihr Inhalt besonders gut ablesen lässt. Die ausgewählte Anzeige kann zusätzlich in einem weiteren Bereich der graphischen Benutzeroberfläche oder auf einem anderen Bildschirm, einer Großbildwand oder mit einem Projektor bildfüllend ausgegeben werden.

Der Prozessor kann beispielsweise ein Mikroprozessor oder ein Mikrocontroller sein. Zur Anzeige und Animation der Anzeigen sieht die graphische Benutzeroberfläche etwa ein geeignetes Widget oder GUI-Element vor, welches mittels objektorientierter Programmierung beispielsweise ein Objekt für die Mantelfläche und jeweils ein Objekt für jede der Anzeigen vorsieht. Ein separates Objekt für die Mantelfläche und/oder das Trägerelement selbst ist jedoch wie zuvor erläutert nicht zwingend erforderlich.

Aus dem Stand der Technik sind zwar Alternativen bekannt, beispielsweise aus dem Dokument "Cover Flow", erhältlich im Internet unter https://en.wikipedia.org/wiki/Cover_Flow am 15.09.2015. Gegenüber dieser Alternative bietet die vorliegende Ausführungsform jedoch den Vorteil, dass die Animation für den Benutzer weniger verwirrend ist. Die seitlich angeordneten Anzeigen werden außerdem weniger stark verzerrt dargestellt. Weiterhin ermöglicht die Ausführungsform ein vertikales Layout zur Positionierung am rechten oder linken Bildschirmrand. Die Anzeigen selbst werden im Rahmen der Animation nicht in die Mitte gekippt, wie dies aus dem Stand der Technik bekannt ist, sondern zeigen stets auf der Mantelfläche nach außen. Beispielsweise kann der Benutzer auf eine der Anzeigen mit der Maus klicken, woraufhin diese in die Auswahlposition rollt, während die übrigen Anzeigen auf der Mantelfläche nachrollen. Die Reihenfolge der Anzeigen bleibt dabei stets erhalten.

In einer Weiterbildung ist der Prozessor programmiert zur Ausgabe der Mantelfläche als graphisches Element auf der graphischen Benutzeroberfläche. Hierbei können auch Teile einer Rückseite der Mantelfläche sichtbar sein. Die Anzeigen werden lediglich auf einer dem Benutzer zugewandten Hälfte der Mantelfläche angeordnet. Die Anzeigen werden durch Verschiebung auf der Mantelfäche rotiert. Anzeigen, die durch die Rotation auf eine dem Benutzer abgewandte Seite der Mantelfläche geschoben werden, werden einzeln mittels einer Animation mit einer schnellen Gleitbewegung entlang der abgewandten Seite der Mantelfläche bewegt, sodass sie wieder auf der dem Benutzer zugewandten Seite der Mantelfläche auftauchen. Gemäß dieser Variante werden nach jeder Rotation stets wieder alle Anzeigen auf der dem Benutzer zugewandten Seite der Mantelfläche angezeigt, sodass stets alle Anzeigen sichtbar sind. Dies ist insbesondere für die Anwendung in Leitwarten von Vorteil, wenn die Anzeigen sicherheitskritische Inhalte ausgeben.

Dies bietet den Vorteil, dass auch Anzeigen, welche durch die Rotation die Rückseite des Trägerelements umrunden, durch eine Animation im Hintergrund schemenhaft visualisiert werden können, wodurch der Benutzer nachvollziehen kann, welche Anzeigen die Seite wechseln. Die Animation entlang der Mantelfläche auf der Rückseite ermöglicht es dem Benutzer, nachzuvollziehen, wo sich die Anzeigen während der Interaktion befinden. Hierdurch kann er diese auch leichter wiederfinden. Je nach perspektivischer Darstellung kann sich die Rückseite der Mantelfläche genau hinter den vorderen Anzeigen oder seitlich versetzt davon befinden.

Gemäß einer Ausführungsform ist der Bildschirm als Tastschirm ausgebildet. Der Prozessor ist programmiert zur Auswertung einer Berührungsgeste auf dem Tastschirm als Eingabesignal, welche eine der Anzeigen oder die Mantelfläche auf dem Tastschirm berührt und/oder verschiebt. Der Prozessor ist weiterhin programmiert zur Rotation der Anzeigen in Abhängigkeit von der Berührungsgeste.

Beispielsweise kann der Benutzer eine der Anzeigen berühren und in die Mitte verschieben, wodurch die Anzeigen entsprechend rotiert werden. Alternativ kann der Benutzer auf eine der seitlich dargestellten Anzeigen tippen, woraufhin diese und sämtliche anderen Anzeigen so rotiert werden, dass die angetippte Anzeige in der Auswahlposition, also in der Mitte zu liegen kommt.

In einer Weiterbildung geben die Anzeigen eine oder mehrere der folgenden Bildinformationen aus:
- Dokumente, Bild- oder Videodateien, wobei die Videodateien insbesondere als bewegte Bilder ausgegeben werden,
- Echtzeitinformationen, welche von Sensoren in einem Energienetz oder in einer industriellen Anlage empfangen werden,
- textuelle, numerische oder graphische Inhalte, welche beispielsweise Sensormessungen repräsentieren,
- Aufgaben zur Überwachung und/oder Wartung eines Energienetzes oder einer industriellen Anlage, und/oder
- Steuerelemente der graphischen Benutzeroberfläche, mit denen sich Prozesse in einem Energienetz oder in einer industriellen Anlage steuern oder regeln lassen.

Gemäß einer Ausführungsform werden die Anzeigen in einem ersten Bereich der graphischen Benutzeroberfläche dargestellt. Eine ausgewählte Anzeige, welche sich in der Auswahlposition befindet, wird zusätzlich in einem zweiten Bereich der graphischen Benutzeroberfläche dargestellt, wobei die ausgewählte Anzeige in dem zweiten Bereich insbesondere vergrößert dargestellt wird.

Dies ermöglicht ein Klonen der ausgewählten Anzeige in einen Hauptbereich der graphischen Benutzeroberfläche. Aufgrund der größeren Fläche des Hauptbereichs können Sensormessungen, Texte etc. besser von der ausgewählten Anzeige abgelesen werden. Weiterhin können Steuerelemente, welche die ausgewählte Anzeige enthält, im Hauptbereich der graphischen Benutzeroberfläche bedient werden.

In einer Weiterbildung sind die Anzeigen horizontal nebeneinander auf der Mantelfläche angeordnet, wobei die Rotationsachse vertikal ausgerichtet ist. Alternativ sind die Anzeigen vertikal übereinander auf der Mantelfläche angeordnet, wobei die Rotationsachse horizontal ausgerichtet ist. Die Richtungsangaben horizontal und vertikal beziehen sich hierbei auf die beiden kartesischen Koordinatenachsen, welche die graphische Benutzeroberfläche aufspannen.

Gemäß dieser Weiterbildung kann die Rotationsachse sowohl vertikal als auch horizontal auf der graphischen Benutzeroberfläche verlaufen. Im zweiten Fall wirkt die graphische Benutzeroberfläche wie die Datumsanzeige einer Armbanduhr.

Auf dem computerlesbaren Datenträger ist ein Computerprogramm gespeichert, welches das Verfahren ausführt, wenn es in dem Prozessor abgearbeitet wird. Das Computerprogramm führt das Verfahren aus, während es in dem Prozessor abgearbeitet wird.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: ein Ausführungsbeispiel einer Benutzerschnittstelle zur interaktiven Auswahl von Anzeigen 1,
- Figur 2: ein erstes Ausführungsbeispiel einer graphischen Benutzeroberfläche 11 zur interaktiven Auswahl von Anzeigen 1,
- Figur 3: ein zweites Ausführungsbeispiel einer graphischen Benutzeroberfläche 11 zur interaktiven Auswahl von Anzeigen 1,
- Figur 4: ein dritten Ausführungsbeispiel einer graphischen Benutzeroberfläche 11 zur interaktiven Auswahl von Anzeigen 1.

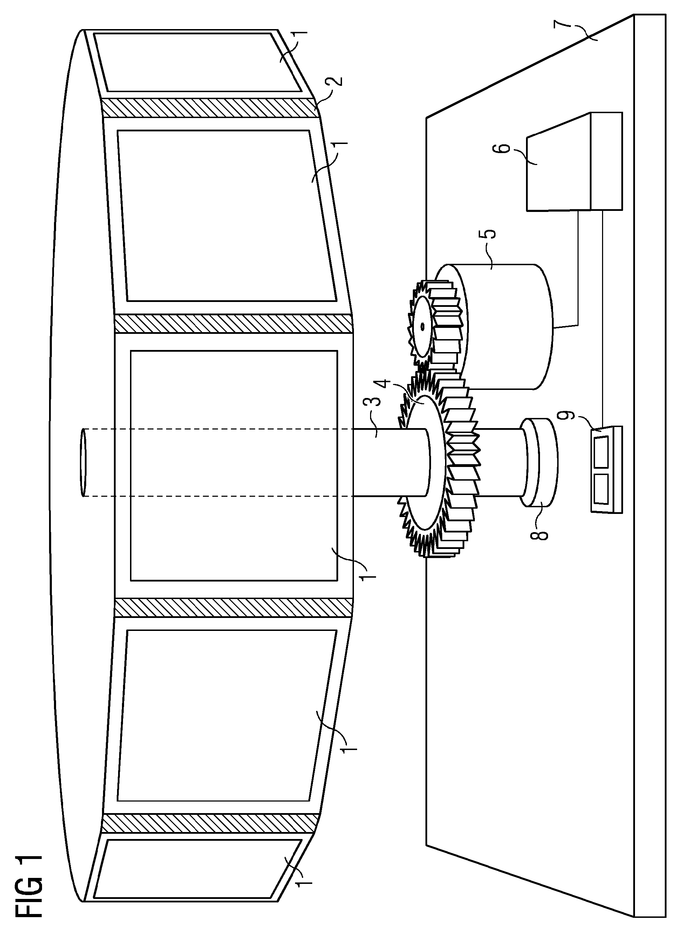

Figur 1 zeigt ein zylindrisches Trägerelement mit einer Mantelfläche 2, auf welcher ringsum und nach außen weisend Anzeigen 1, beispielsweise Flachbildschirme, montiert sind. Insoweit die Anzeigen 1 eine ebene Oberfläche aufweisen, kann die Bauform des Trägerelements auch als gerades Prisma bezeichnet werden.

Das Trägerelement ist auf einer Welle 3 montiert, welche lotrecht ausgerichtet und auf einem Lager 8 montiert ist. Die Welle 3 ist über ein Getriebe 4 mit einem Antrieb 5 verzahnt. Über den Antrieb 5 kann das Trägerelement mit den Anzeigen 1 um eine Rotationsachse rotiert werden, welche durch die Welle 3 vorgegeben ist. Hierzu wird der Antrieb 5 durch eine Steuereinheit 6, beispielsweise eine elektrische Schaltung oder eine speicherprogrammierbare Steuerung, angesteuert, welche Eingabesignale von einem Eingabeelement 9 auswertet. Das Lager 8, das Eingabeelement 9, der Antrieb 5 und die Steuereinheit 6 sind auf einer Grundplatte 7 montiert.

Das Eingabeelement 9 besitzt beispielsweise zwei Drucktaster. Ein linker Drucktaster erzeugt ein Eingabesignal, welches die Steuereinheit 6 in eine Rotation des Trägerelementes gegen den Uhrzeigersinn umsetzt. Ein rechter Drucktaster des Eingabeelementes 9 erzeugt ein Eingabesignal, welches von der Steuereinheit 6 in eine Rotation des Trägerelements im Uhrzeigersinn umgesetzt wird. Auf diese Weise kann ein Benutzer die Anzeigen 1 intuitiv in die gewünschte Richtung verfahren, um eine gewünschte Anzeige in eine Auswahlposition im Vordergrund zu bringen. Die Auswahlposition ist hierbei die mittige, dem Benutzer zugewandte Position; in Figur 1 also die Position der mittleren Anzeige 1 von den fünf eingezeichneten Anzeigen 1.

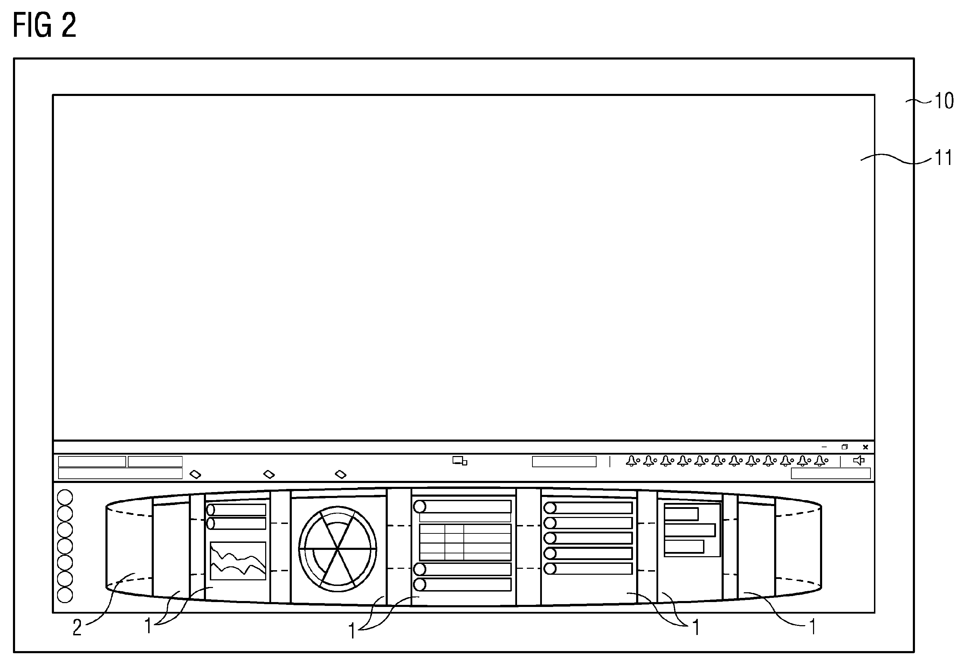

Figur 2 zeigt eine graphische Benutzeroberfläche 11, welche auf einem Bildschirm 10, beispielsweise einem LED- oder LCD-Bildschirm oder einer Großbildwand, angezeigt wird. Die Mantelfläche 2 des Trägerelements ist hierbei rein virtuell, d.h. die Mantelfläche 2 wird auf der graphischen Benutzeroberfläche 11 lediglich als graphisches Element dargestellt. Gleiches gilt für die Anzeigen 1, welche statische oder dynamische Dokumente, Bild- oder Videodateien ausgeben können. Die Mantelfläche 2 und die Anzeigen 1 sind hierzu beispielsweise als Objekte der graphischen Benutzeroberfläche 11 programmiert. Wie in Figur 2 erkennbar, kann die Mantelfläche 2 auch im Hintergrund zwischen den Anzeigen 1 sichtbar sein, wodurch ein Benutzer einen visuellen Eindruck der gesamten Mantelfläche 2 sowohl im Vordergrund als auch im Hintergrund erhält. Dies unterstützt die visuelle Metapher eines zylindrischen Trägerelements.

Die Anzeigen 1 werden lediglich auf einer dem Benutzer zugewandten Hälfte der Mantelfläche 2 horizontal nebeneinander angeordnet. Sie werden durch horizontale Verschiebung auf der Mantelfläche 2 um eine senkrechte Rotationsachse rotiert, welche geometrisch die Rotationsachse der Mantelfläche 2 ist. Anzeigen 1, die durch die Rotation auf eine dem Benutzer abgewandte Seite der Mantelfläche 2 geschoben werden, werden einzeln mittels einer Animation mit einer schnellen Gleitbewegung entlang der abgewandten Seite der Mantelfläche 2 bewegt, sodass sie wieder auf der dem Benutzer zugewandten Seite der Mantelfläche 2 auftauchen. Gemäß dieser Variante werden nach jeder Rotation stets wieder alle Anzeigen 1 auf der dem Benutzer zugewandten Seite der Mantelfläche 2 angezeigt, sodass nach jeder Rotation stets alle Anzeigen 1 sichtbar sind.

Beispielsweise kann der Benutzer auf eine der Anzeigen 1 mit der Maus klicken oder im Fall eines Tastschirms mit dem Finger tippen, woraufhin die entsprechende Anzeige 1 gemeinsam mit den anderen Anzeigen 1 so um die Rotationsachse rotiert, also so entlang der Mantelfläche 2 verschoben wird, dass sie in der Mitte zu liegen kommt. Die Mittelposition ist hierbei eine Auswahlposition. Dies ermöglicht dem Benutzer eine sehr schnelle und intuitive Navigation auf der graphischen Benutzeroberfläche 11.

Die Anzeigen 1 sowie die Mantelfläche 2 werden auf dem Bildschirm 10 perspektivisch dargestellt. Die graphische Benutzeroberfläche 11 ist beispielsweise objektorientiert programmiert. Ein Betriebssystem, welches die graphische Benutzeroberfläche 11 über eine Grafikkarte auf dem Bildschirm 10 ausgibt, enthält Programmcode, welcher die Anzeigen 1 sowie die Mantelfläche 2 als graphische Objekte verwaltet. Hierbei werden die graphischen Objekte als Objekte in einem dreidimensionalen Raum beschrieben und durch eine perspektivische Abbildung auf die zweidimensionale graphische Benutzeroberfläche 11 projiziert. Hierdurch entsteht für den Benutzer ein dreidimensionaler Eindruck. Heutige Grafikkarten unterstützten dies beispielsweise durch die OpenGL-Programmierschnittstelle.

Grundsätzlich kann der Bildschirm 10 auch ein 3D-Bildschirm sein, welcher als graphische Benutzeroberfläche 11 ein 3D-Bild ausgibt. In diesem Fall können die graphischen Objekte so ausgegeben werden, dass sie einen tatsächlich dreidimensionalen Seheindruck erzeugen.

Die Anzeigen 1 können beispielsweise Dokumente, Bild- oder Videodateien ausgeben. Sie können weiterhin Echtzeitinformationen visualisieren, welche von Sensoren in einem Energienetz oder in einer industriellen Anlage empfangen werden. Die Anzeigen 1 können ihre Inhalte textuell, numerisch und/oder graphisch darstellen. Als Inhalte können die Anzeigen 1 auch Aufgaben zur Überwachung und/oder Wartung eines Energienetzes oder einer industriellen Anlage anzeigen. Sie können ferner auch Steuerelemente der graphischen Benutzeroberfläche 11 enthalten, mit denen sich vorzugsweise Prozesse in einem Energienetz oder in einer industriellen Anlage steuern oder regeln lassen. Die Steuerelemente können optional in den Anzeigen 1 unmittelbar bedienbar sein. Als Steuerelemente eignen sich beispielsweise Schaltflächen, Checkboxen, Dropdown-Menüs, editierbare Textfelder, Schieberegler etc., welche innerhalb der jeweiligen Anzeige 1 angezeigt werden.

Die jeweils ausgewählte, d.h. jeweils in der Auswahlposition bzw. Mittelposition positionierte Anzeige 1 kann zusätzlich in einem zweiten Bereich der graphischen Benutzeroberfläche dargestellt werden, wobei die ausgewählte Anzeige in dem zweiten Bereich vorzugsweise vergrößert dargestellt wird. Dies ermöglicht ein Klonen der ausgewählten Anzeige 1 in einen Hauptbereich der graphischen Benutzeroberfläche 11, auf einen zweiten Bildschirm oder auf eine Großbildwand. Aufgrund der größeren Fläche des Hauptbereichs können Sensormessungen, Texte etc. besser von der ausgewählten Anzeige abgelesen werden. Weiterhin können Steuerelemente, welche die ausgewählte Anzeige enthält, im Hauptbereich der graphischen Benutzeroberfläche 11 bedient werden.

Je nach Proportion des Trägerelements und der Anzeigen 1 können beispielsweise 5, 10 oder 20 Anzeigen 1 auf der dem Benutzer zugewandten Seite der Mantelfläche 2 angeordnet werden. Ein Hoch- oder Querformat der Anzeigen 1 kann hierzu geeignet gewählt werden.

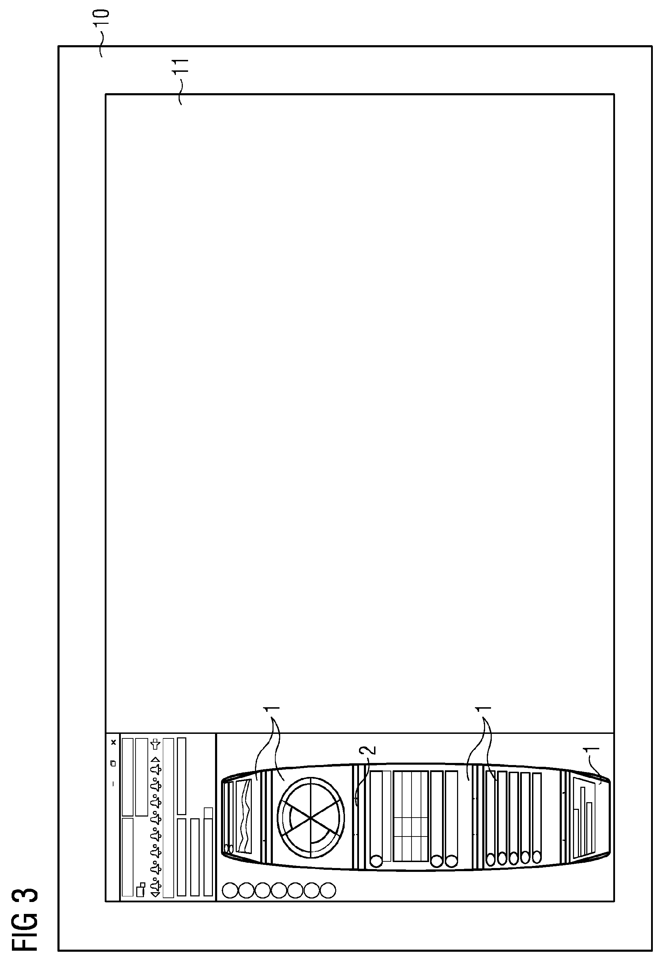

Figur 3 zeigt erneut eine graphische Benutzeroberfläche 11 auf einem Bildschirm 10, bei der die Mantelfläche 2 mit den Anzeigen 1 ein nicht näher gezeigtes und programmierseitig auch nicht erforderliches Trägerelement umschreibt, dessen Rotationsachse in horizontaler Richtung verläuft. Das bedeutet, dass die Anzeigen 1 hier rotiert werden, indem sie vertikal entlang der Mantelfläche 2 verschoben werden. Diese visuelle Metapher erinnert an eine Datumsanzeige einer Armbanduhr und lässt sich sehr platzsparend am linken oder rechten Rand des Bildschirms 10 auf der graphischen Benutzeroberfläche 11 anordnen.

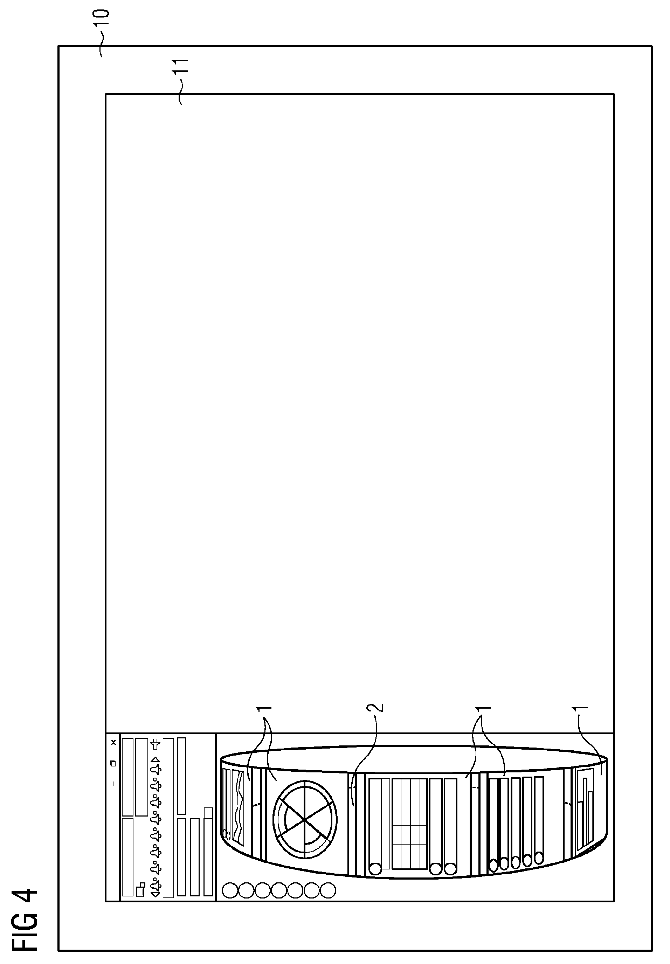

Figur 4 zeigt die graphische Benutzeroberfläche 11 aus Figur 3, wobei die Mantelfläche 2 jedoch aus einer etwas anderen Perspektive auf dem Bildschirm 10 angezeigt wird, wodurch die visuelle Metapher für den Benutzer noch einfacher wahrnehmbar ist, da nun auch große Teile der Rückseite der Mantelfläche 2 auf der graphischen Benutzeroberfläche 11 sichtbar sind. Dies ermöglicht eine besonders intuitive Animation und Interaktion für den Benutzer.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Benutzerschnittstelle zur interaktiven Auswahl einer Anzeige,
- mit einer Mehrzahl von Anzeigen (1), welche nebeneinander auf einer Mantelfläche (2) eines zylindrischen oder prismenförmigen Trägerelements angeordnet sind, und
- mit einer Steuereinheit (6), welche eingerichtet ist zur Rotation der Anzeigen (1) um eine Rotationsachse, welche insbesondere eine Symmetrieachse des Trägerelements ist, in Abhängigkeit von Eingabesignalen, wodurch eine der Anzeigen (1) in einer Auswahlposition positionierbar ist.

2. Benutzerschnittstelle nach Anspruch 1,
- mit einem Eingabeelement (9), welches Benutzereingaben in die Eingabesignale umwandelt, und
- mit einer Welle (3), auf welcher das Trägerelement montiert ist, und
- mit einem Antrieb (5), welcher über ein Getriebe (4) mit der Welle (3) verzahnt ist und durch die Steuereinheit (6) angesteuert wird.

3. Benutzerschnittstelle nach Anspruch 1 oder 2,
- bei der die Anzeigen (1) LED-, OLED- oder LCD-Anzeigen sind.

4. Benutzerschnittstelle nach Anspruch 1,
- mit einem Bildschirm (10),
- bei der die Steuereinheit (6) ein Prozessor ist, welcher programmiert ist
- zur Ausgabe der Anzeigen (1) als graphische Elemente einer graphischen Benutzeroberfläche (11) auf dem Bildschirm (10), wobei das Trägerelement, dessen Mantelfläche (2) und die Anzeigen (1) virtuell sind,
- zur Auswertung der Eingabesignale, und
- zur Rotation der Anzeigen (1) auf der graphischen Benutzeroberfläche (11) in Abhängigkeit von den Eingabesignalen.

5. Benutzerschnittstelle nach Anspruch 4,
- bei der der Prozessor programmiert ist
- zur Ausgabe der Mantelfläche (2) als graphisches Element auf der graphischen Benutzeroberfläche (11),
- zur Anordnung der Anzeigen (1) lediglich auf einer einem Benutzer zugewandten Hälfte der Mantelfläche (2),
- zur Rotation der Anzeigen (1) durch Verschiebung auf der Mantelfläche (2),
- zur Ausgabe einer Animation, welche Anzeigen (1), die durch die Rotation auf eine dem Benutzer abgewandte Seite der Mantelfläche (2) geschoben werden, einzeln mit einer schnellen Gleitbewegung entlang der abgewandten Seite der Mantelfläche (2) bewegt, sodass sie wieder auf der dem Benutzer zugewandten Seite der Mantelfläche (2) auftauchen, wodurch nach jeder Rotation stets wieder alle Anzeigen (1) auf der dem Benutzer zugewandten Seite der Mantelfläche (2) sichtbar sind.

6. Benutzerschnittstelle nach Anspruch 4 oder 5,
- bei der der Bildschirm (10) als Tastschirm ausgebildet ist, und
- bei dem der Prozessor programmiert ist
- zur Auswertung einer Berührungsgeste auf dem Tastschirm als Eingabesignal, welche eine der Anzeigen (1) oder die Mantelfläche (2) auf dem Tastschirm berührt und/oder verschiebt, und
- zur Rotation der Anzeigen (1) in Abhängigkeit von der Berührungsgeste.

7. Benutzerschnittstelle nach einem der Ansprüche 4 bis 6,
- bei der die Anzeigen (1) zur Ausgabe einer oder mehrerer der folgenden Bildinformationen eingerichtet sind:
- Dokumente, Bild- oder Videodateien, wobei die Videodateien insbesondere als bewegte Bilder ausgegeben werden,
- Echtzeitinformationen, welche von Sensoren in einem Energienetz oder in einer industriellen Anlage empfangen werden,
- textuelle, numerische oder graphische Inhalte, welche beispielsweise Sensormessungen repräsentieren,
- Aufgaben zur Überwachung und/oder Wartung eines Energienetzes oder einer industriellen Anlage, und/oder
- Steuerelemente der graphischen Benutzeroberfläche (11), mit denen sich Prozesse in einem Energienetz oder in einer industriellen Anlage steuern oder regeln lassen.

8. Benutzerschnittstelle nach einem der Ansprüche 4 bis 7,
- bei der der Prozessor programmiert ist
- zur Ausgabe der Anzeigen (1) in einem ersten Bereich der graphischen Benutzeroberfläche (11),
- zur zusätzlichen Ausgabe einer ausgewählten Anzeige, welche sich in der Auswahlposition befindet, in einem zweiten Bereich der graphischen Benutzeroberfläche (11), wobei die ausgewählte Anzeige in dem zweiten Bereich insbesondere vergrößert dargestellt wird.

9. Benutzerschnittstelle nach einem der Ansprüche 4 bis 8,
- bei der der Prozessor programmiert ist
- zur Ausgabe der Anzeigen (1) horizontal nebeneinander auf der Mantelfläche (2), wobei die Rotationsachse vertikal ausgerichtet ist, oder
- zur Ausgabe der Anzeigen (1) vertikal übereinander auf der Mantelfläche (2), wobei die Rotationsachse horizontal ausgerichtet ist.

10. Verfahren zur interaktiven Auswahl einer Anzeige,
- bei dem eine Steuereinheit (6) mehrere Anzeigen (1), welche nebeneinander auf einer Mantelfläche (2) eines zylindrischen oder prismenförmigen Trägerelements angeordnet sind, in Abhängigkeit von Eingabesignalen um eine Rotationsachse rotiert, welche insbesondere eine Symmetrieachse des Trägerelements ist, wodurch eine der Anzeigen (1) in einer Auswahlposition positioniert wird.

11. Verfahren nach Anspruch 10,
- bei dem die Steuereinheit ein Prozessor ist, welcher
- die Anzeigen (1) als graphische Elemente einer graphischen Benutzeroberfläche (11) auf einem Bildschirm (10) ausgibt, wobei das Trägerelement, dessen Mantelfläche (2) und die Anzeigen (1) virtuell sind,
- die Eingabesignale auswertet, und
- die Anzeigen (1) in Abhängigkeit von den Eingabesignalen auf der graphischen Benutzeroberfläche (11) rotiert.

12. Verfahren nach Anspruch 11,
- bei dem der Prozessor
- die Mantelfläche (2) als graphisches Element auf der graphischen Benutzeroberfläche (11) ausgibt, wobei insbesondere auch Teile einer Rückseite der Mantelfläche (2) sichtbar sind,
- der Anzeigen (1) lediglich auf einer einem Benutzer zugewandten Hälfte der Mantelfläche (2) anordnet,
- die Anzeigen (1) durch Verschiebung auf der Mantelfläche (2) rotiert,
- eine Animation ausgibt, welche Anzeigen (1), die durch die Rotation auf eine dem Benutzer abgewandte Seite der Mantelfläche (2) geschoben werden, einzeln mit einer schnellen Gleitbewegung entlang der abgewandten Seite der Mantelfläche (2) bewegt, sodass sie wieder auf der dem Benutzer zugewandten Seite der Mantelfläche (2) auftauchen, wodurch nach jeder Rotation stets wieder alle Anzeigen (1) auf der dem Benutzer zugewandten Seite der Mantelfläche (2) sichtbar sind.

13. Verfahren nach Anspruch 11 oder 12,
- bei dem der Bildschirm (10) ein Tastschirm ist, und
- bei dem der Prozessor
- eine Berührungsgeste auf dem Tastschirm als Eingabesignal auswertet, welche eine der Anzeigen (1) oder die Mantelfläche (2) auf dem Tastschirm berührt und/oder verschiebt, und
- die Anzeigen (1) in Abhängigkeit von der Berührungsgeste rotiert.

14. Verfahren nach einem der Ansprüche 11 bis 13,
- bei dem die Anzeigen (1) eine oder mehrere der folgenden Bildinformationen ausgeben:
- Dokumente, Bild- oder Videodateien, wobei die Videodateien insbesondere als bewegte Bilder ausgegeben werden,
- Echtzeitinformationen, welche von Sensoren in einem Energienetz oder in einer industriellen Anlage empfangen werden,
- textuelle, numerische oder graphische Inhalte, welche beispielsweise Sensormessungen repräsentieren,
- Aufgaben zur Überwachung und/oder Wartung eines Energienetzes oder einer industriellen Anlage, und/oder
- Steuerelemente der graphischen Benutzeroberfläche (11), mit denen sich Prozesse in einem Energienetz oder in einer industriellen Anlage steuern oder regeln lassen.

15. Verfahren nach einem der Ansprüche 11 bis 14,
- bei dem die Anzeigen (1) in einem ersten Bereich der graphischen Benutzeroberfläche (11) dargestellt werden, und
- bei dem eine ausgewählte Anzeige, welche sich in der Auswahlposition befindet, zusätzlich in einem zweiten Bereich der graphischen Benutzeroberfläche (11) dargestellt wird, wobei die ausgewählte Anzeige in dem zweiten Bereich insbesondere vergrößert dargestellt wird.

16. Verfahren nach einem der Ansprüche 11 bis 15,
- bei dem die Anzeigen (1) horizontal nebeneinander auf der Mantelfläche (2) angeordnet sind, wobei die Rotationsachse vertikal ausgerichtet ist, oder
- bei dem die Anzeigen (1) vertikal übereinander auf der Mantelfläche (2) angeordnet sind, wobei die Rotationsachse horizontal ausgerichtet ist.

17. Computerlesbarer Datenträger,
- auf dem ein Computerprogramm gespeichert ist, welches das Verfahren nach einem der Ansprüche 11 bis 16 ausführt, wenn es in dem Prozessor abgearbeitet wird.

18. Computerprogramm,
- welches das Verfahren nach einem der Ansprüche 11 bis 16 ausführt, während es in dem Prozessor abgearbeitet wird.
